# EUROPEAN PATENT SPECIFICATION

(11) **EP 2 671 355 B1**
(45) Date of publication and mention of the grant of the patent: **15.03.2017**
(21) Application number: 12703192.0
(22) Date of filing: 19.01.2012
(51) Int. Cl.: H04L 12/58

(54) **METHOD AND SYSTEM FOR UNIFIED MANAGEMENT OF COMMUNICATION EVENTS**
VERFAHREN UND SYSTEM ZUR EINHEITLICHEN VERWALTUNG VON KOMMUNIKATIONSEREIGNISSEN
PROCÉDÉ ET SYSTÈME POUR UNE GESTION UNIFIÉE D'ÉVÉNEMENTS DE COMMUNICATION

(30) Priority: 02.02.2011 US 201113019757
(43) Date of publication of application: 11.12.2013
(73) Proprietor: Vonage Business Inc., Atlanta, GA 30339 (US)
(72) Inventor: ARORA, Nehar, Old Bridge, New Jersey 08857 (US); GRISINGER, Daniel, Freehold, New Jersey 07728 (US); KADAKIA, Nirav, Old Bridge, New Jersey 08857 (US)
(74) Representative: Zimmermann & Partner Patentanwälte mbB
(86) International application number: PCT/US2012/021816
(87) International publication number: WO 2012/106126

(56) References cited:
- WO-A1-2008/100594
- WO-A2-2009/111674
- US-A1- 2003 095 643

## Description

### BACKGROUND OF THE INVENTION

### Field of the Invention

Embodiments of the present invention generally relate to communication routing and, more specifically, to a method and system for unified management of communication events.

### Description of the Related Art

As mobile network access has become more and more common, a myriad of methods of communication have developed. For example, document WO2008100594 describes a system, method and program storage device for unified messaging services. The method includes receiving a message generated by a sender, collecting user attribute information of the sender and/or a recipient, providing at least one policy factor associated with the user attribute information, converting the first message into a unified format message, processing the user attribute information of the sender and/or the recipient and the policy factor to determine a terminal device for the recipient, converting the unified format message into a second message according to the determined terminal device for the recipient and delivering the message converted according to the determined terminal device for the recipient to the recipient. As a further example, document US 2003095643 describes a messaging center connected to a communications network that processes messages intended for a subscriber. A caller sends a message to the message center in a first caller format. The message center stores the message in the first caller format, notifies the subscriber, and awaits a request for the stored message from the subscriber. In response to the message request, the message center sends the stored message to the subscriber in a first subscriber format independent of the first caller format. If the subscriber desires, the subscriber constructs a response to the message and sends it to the message center in a second subscriber format independent of the first caller format and the first subscriber format. The message center stores the response in the second subscriber format and sends the stored response to the caller in a second caller format independent of the first caller format and the first and second subscriber formats. It is common to receive communications in the form of text messages, emails, instant messages (IMs), phone calls, voice mails, and picture messages, and new methods of communication continue to be developed. With the large number of communication mediums available to users, it is often difficult to determine which medium provides an optimal communication experience for both the sender and the receiver. For example, a user might prefer to receive messages via email rather than text message between the hours of 9am and 5pm because they will be at their desk at work and unable to access their mobile phone.

Currently no messaging architecture exists that is capable of providing a single routing solution for a variety of messaging types. This results in conversions and translations occurring between carriers (e.g. an IM sent to a mobile phone as a text message must be translated across the border between the IM network owner and the mobile phone carrier), often resulting in incorrectly formatted data or the addition of unnecessary formatting data that is transmitted along with the reformatted communication. Therefore, there is a need in the art for a method and system for unified management of communication events.

### SUMMARY OF THE INVENTION

Embodiments of the present invention comprise a method and apparatus for providing unified management of communication events. In one embodiment, the method comprises receiving a communication message in a first format, converting the communication message to a message in generic format, wherein the generic format includes information designating a type of the source message, determining one or more message destinations based on a set of routing rules, determining one or more message formats based on the determined destinations, converting the message in generic format into a converted message, and transmitting the converted message to the one or more determined destinations. The message in generic format is stored in a destination agnostic format. The converted message is stored in the one or more message formats associated with the one or more determined destinations.

In another embodiment, the system comprises a messaging module and a routing module. The messaging module sends and receives communication messages, converts the communication messages into a generic format, and converts one or more messages in generic format into a destination format, and wherein the generic format includes information designating a type of the source message. The routing module determines one or more destinations for the communication messages based on one or more routing rules contained within one or more user profiles.

In another embodiment, the system comprises a messaging module, a routing module, a profile manager, a synchronization module, and an event module. The messaging module sends and receives communication messages, converts the communication messages into a generic format, and converts one or more messages in generic format into a destination format, and wherein the generic format includes information designating a type of the source message. The routing module determines one or more destinations for the communication messages based on one or more routing rules contained within one or more user profiles. The user profiles comprise a user identifier, one or more communication addresses, and one or more routing rules. The profile manager accesses the one or more user profiles to determine the one or more destinations. The synchronization module interfaces with the profile manager to create the one or more rules by synchronizing with a scheduling application. The
event module generates non-communication events that are routed and transmitted as communication messages to one or more destinations.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
FIG 1 is a block diagram depicting an exemplary embodiment of a system for providing unified management of communication events in accordance with one or more aspects of the invention;
FIG 2 is a block diagram depicting a computer operating as a system for providing unified management of communication events in accordance with one or more aspects of the present invention;
FIG 3 is a block diagram depicting a user profile in accordance with one or more aspects of the present invention;
FIG 4 is a functional flow diagram depicting a message flow through a communication system in accordance with one or more aspects of the present invention; and
FIG 5 is a flow diagram depicting a method for providing unified management of communication events in accordance with one or more aspects of the present invention.

### DETAILED DESCRIPTION

A method and system for providing unified management of communication events is described herein. The inventive method and system advantageously provide for routing and conversion of communication events into one or more communication formats in accordance with defined rules and preferences.

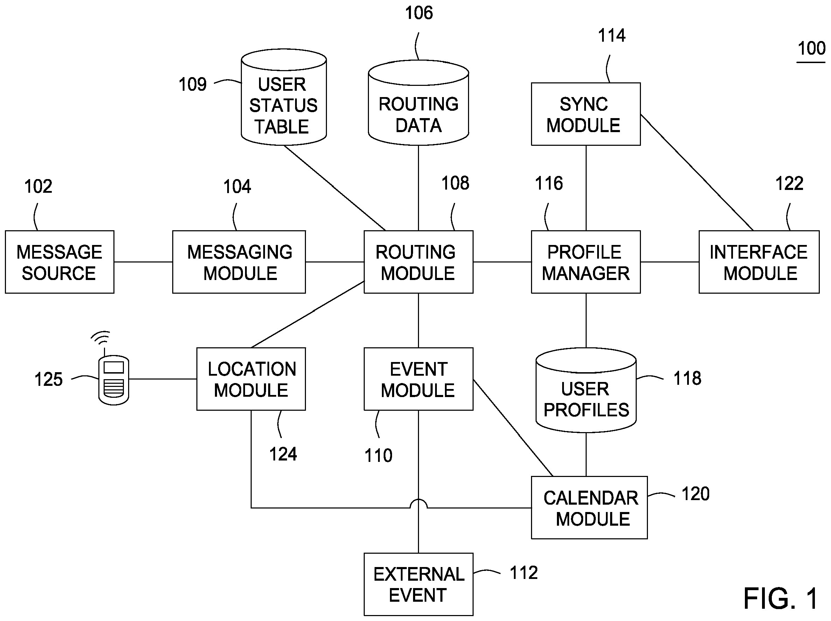

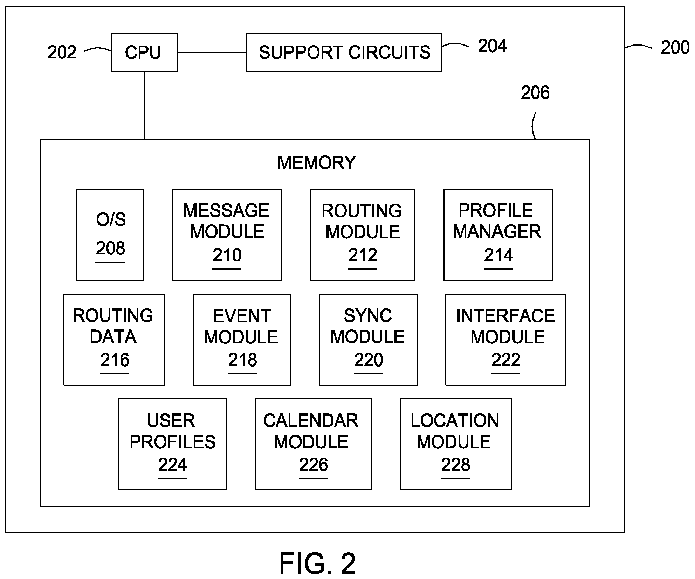

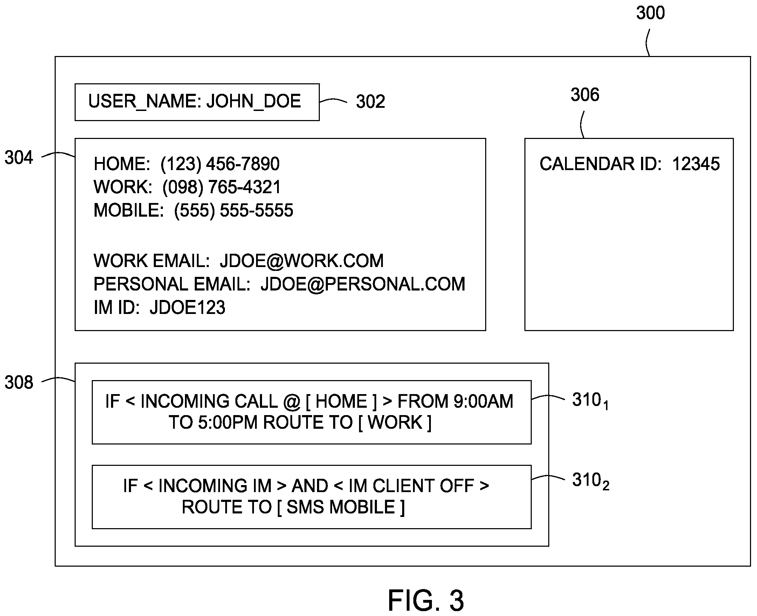

FIG. 1 is a block diagram depicting an exemplary embodiment of a communication system 100 in accordance with one or more aspects of the invention. In some embodiments, the various elements of the communication system 100 provide means for performing the operations necessary to provide unified management of communication events. While the elements of the communication system 100 are discussed with respect to various functional modules, one of ordinary skill in the art would realize that the description provided herein must necessarily be executed upon computer hardware, as described with respect to FIG 2, and thus the system operates as a specific purpose machine programmed by computer software for the purpose of routing communication events. In some embodiments, the communication system 100 is programmed by the method described with respect to FIG 3 for the purpose of routing communication events.

The communication system 100 includes a message source 102. The message source 102 is any device capable of generating a communication message as known in the art, such as a mobile phone, a computer, a home telephone, a personal digital assistant, and the like. The communication message may be an email, a Short Message Service (SMS) message, a telephone call, a voicemail, an instant message, or the like. The message source 102 is coupled to a messaging module 104. The messaging module 104 operates to receive the communication message from the message source 102. The messaging module 104 may be any device or server capable of receiving the communication message. After receiving the communication message, the messaging module 104 forwards the communication message to a routing module 108. In some embodiments, the messaging module 104 converts the communication message into a generic format before forwarding.

The routing module 108 receives the communication message from the messaging module 104. In some embodiments, the routing module 108 converts the communication message into a generic format. The routing module 108 accesses a store of static routing data 106 and a profile manager 116 to route the communication message to a destination. The static routing data 106 comprises routing data that is not associated with a particular user profile. The static routing data 106 provides the ability to override user profile based routing. For example, if a user has chosen to receive instant messages as the primary method of communication from some contact, but there is a system-wide outage of instant messaging services, then the static routing data 106 might have a temporary static routing setup that allows the system to override user preferences and send out an SMS or email instead of an instant message.

Another situation where static routing data 106 is used is to manage cost. For example, the system may base some routing decisions on the cheapest method to reach a customer in certain geographies. For example, if the system is aware that the act of sending out SMS in a certain country is prohibitively expensive, the system may restrict communications using the other modes to avoid incurring prohibitive costs to the user.

The profile manager 116 provides the routing module 108 with routing data for specific users and specific scenarios. This profile routing data is stored in one or more user profiles 118. For example, a user profile 118 may indicate that SMS messages sent to the user's mobile phone between the hours of 9am and 5pm should be forwarded to the user's work email. The contents of the user profiles 118 are discussed further with respect to FIG 3.

The routing module 108 is further coupled to an event module 110. The event module 110 generates events that are sent to the routing module as non-communication events, which are then transmitted as communication messages. In some embodiments, the event module 110 generates events as a result of external events 112 received by the event module 110. In some embodiments, the events are generated in response to calendar data received from a calendar module 120. The external events 112 may be configured by the user or received from external sources. For example, the user may set up a reminder event to send an email to themselves referencing items remaining on a to-do list. The calendar module 120 allows the user to configure certain messages to be sent at certain times or dates. For example, the user may set up a calendar event to send a SMS to remind him of his wife's birthday. In some embodiments, and the event module 110 generates events based upon the data stored within the calendar module 120 to provide external messaging solutions. For example, the calendar module 120 may send an event based on a birthday reminder. The event may include instructions to send an email to the user with the reminder. The email may include a link to send an event to the event module 110 to send flowers to the birthday celebrant. The link in the email would trigger an external event 112 via the event module 110 that would trigger an external website (e.g. a florist) to send the flowers. In some embodiments, the user configures the events of the calendar module 120 via an interface module 122. In some embodiments, data contained within the calendar module 120 is associated with a particular user via a data link within the user profile stored within the set of user profiles 118.

In some embodiments, the external events 112 received by the event module 110 update a status of the user maintained by the routing module. For example, a user may power on a game console or other home audio/video equipment, indicating they are capable of receiving communications via the game console or other home audio/video equipment. Upon enabling the game console, the event module 110 would receive an external event 112 indicating the user is available via the game console. One of ordinary skill in the art would recognize that the external event 112 could be generated by either the game console itself, a system operable to monitor for activity on the game console, or some combination of the two. Other events that could be processed in the same or similar manner include powering on of a home set-top box, a switch from idle to active on a computer, a Global Positioning System (GPS) location change (e.g. the user has left the office and returned home), or any other activity from which a user state can be inferred.

Upon receipt of such an event, the event module 110 would instruct the routing module 108 to update the status of the user. In some embodiments, the routing module 108 maintains a user state table 109 indicating the current status of each user. These statuses may then be used by the system to route communications in accordance with a set of defined rules. These rules are discussed further with respect to FIG 3.

In some embodiments, the routing module 108 may be further coupled to a location module 124. The location module 124 provides location awareness to the system 100. In some embodiments, the location module 124 receives location information of a user from a mobile device 125. The mobile device 125 may be any mobile device capable of providing information sufficient to determine location. As a specific, non-limiting example, the mobile device 125 may have a GPS module for determining a location using the Global Navigation Satellite System (GNSS). In some embodiments, the location module 124 may determine the location of the mobile device 125 by ascertaining the geographic location of one or more cellular phone towers with which the device is communicating. One of ordinary skill in the art would recognize a variety of other methods for determining the location of the mobile device, including identifying nearby wireless networks. One of ordinary skill in the art would realize that the location determination function could be performed either on the mobile device 125, such as where the mobile device 125 has a GPS receiver, or at the location module 124 in response to information received from the device, such as determining the location of connected cellular towers.

The profile manager 116 is further coupled to a sync module 114 and the interface module 122. The interface module 122 provides an interface to add, remove, and modify data contained within the user profiles 118. This interface may further include the ability to add, remove, and modify calendar events as used by the calendar module 120. The sync module 114 provides for the ability to synchronize with datebook and/or calendar applications. For example, a user may update a calendar application to indicate they will be in a meeting from 10:00am to 11:00am. The sync module 114 would then direct all phone calls to the user's mobile phone directly to voicemail during this time period.

Each of the modules 104, 108, 110, 114, 116, 120, and 122 and the data stores 106 and 118 may be physically implemented using one or more computer systems (an exemplary embodiment of a computer system is described below with respect to FIG 2). The computer systems may be located anywhere in countries throughout the world. The system may further comprise other computer systems to facilitate communication services, such as provisioning servers, proxy servers, media relay servers, and the like (not shown).

FIG 2 is an illustrative drawing of a computer 200 implementing an embodiment of the present invention. Said computer 200 is used to provide unified management of communication events, such as those performed by the communication system 100 described with respect to FIG 1. In some embodiments, the computer 200 provides means to perform the routing of communication events by executing the elements of a communication system as described with respect to FIG 1. As such, the various means to perform the invention relate to computer software executing on one or more computer systems comprised of computer hardware. In some embodiments, the computer 200 is a server computer as generally known in the art.

The computer 200 or multiple ones of the computer 200 may be used to implement any of the servers and/or methods described herein. The computer 200 may be one of any form of a general purpose computer used in accessing and operating within an communication network. The computer 200 may include a central processing unit (CPU) 202, a memory 206, and various support circuits 204. The CPU 202 may include one or more microprocessors or the like as known in the art. The support circuits 204 include conventional cache, power supplies, clock circuits, data registers, and the like used in conjunction with software executing on the CPU 302. The memory 206, or computer readable medium, may include one or more of the following random access memory, read only memory, magneto-resistive read/write memory, optical read/write memory, cache memory, magnetic read/write memory, generally non-volatile memory and the like.

The memory 206 may store software that is executed to perform methods of according to embodiments of the invention. For example, the software can implement at least a portion of the method 500 performed by a message module 104 or routing module 108. The software, when executed by the processor 202, transforms the general purpose computer into a specific purpose computer that controls methods described herein. Although embodiments of the process of the present invention are discussed as being implemented as a software routine, some of the method steps that are disclosed herein may be performed in hardware or a combination of hardware and software. As such, the invention may be implemented in software as executed upon a computer system, in hardware as an application specific integrated circuit or other type of hardware implementation, or a combination of software and hardware.

Additionally, the software may act as a "stand alone" program or may be embedded with one or more other routines or programs that provide one or more additional telecommunication services. The software of the present invention is capable of being executed on computer operating systems including but not limited to MICROSOFT computer products, APPLE computer products, UNIX, and LINUX based operating systems. Similarly, the software of the present invention is capable of being performed using CPU architectures including but not limited to Apple Power PC, AMD/Intel x86, Sun SPARC, and Intel ARM.

In some embodiments, the memory comprises an operating system 208, a message module 210, a routing module 212, a profile manager 214, routing data 216, an event module 218, a sync module 220, an interface module 222, one or more user profiles 224, and a calendar module 226. In operation, the CPU 202 executes the operating system 208 to control the general utilization and functionality of the computer 200. The message module 210, the routing module 212, the profile manager 214, the routing data 216, the event module 218, the sync module 220, the interface module 222, the one or more user profiles 224, and the calendar module 226 perform the same functionality as the same named components of the communication system 100 discussed with respect to FIG 1. While the computer 200 is shown as a single computing device capable of executing every element of the communication system 100, one of ordinary skill in the art would recognize that a plurality of computers networked together could each execute to perform one or more of the elements of the communication system 100.

FIG 3 is a block diagram of a user profile 300 used to route communication messages in accordance with embodiments of the present invention. The user profile 300 comprises an identifier 302, one or more communication addresses 304, one or more data links 306, and a set of routing rules 308. The identifier 302 is a value that provides a unique key for the user profile 300. In some embodiments, the identifier 302 may be a key value in a database. In some embodiments, the identifier 302 may be associated with one or more addresses present within the communication addresses 304. The identifier 302 is used to differentiate the user profile 300 from other user profiles. The user profile 300 further comprises one or more communication addresses 304. The communication addresses 304 comprise values identifying various destination addresses for communications with the user associated with the user profile 300, such as phone numbers, email addresses, IM addresses, and the like.

The user profile 300 may also comprise one or more data links 306. The data links 306 point to external data sources which may be also be pulled when querying the user profile 300. For example, the user profile 300 may include a data link 306 to a set of calendar data. A query to the user profile 300 would be able to follow the data link 306 to a set of calendar data that may also be used in routing communications, such as a daily schedule. Other examples of datasets that could be linked via the data links 306 include contact address book data, geographic location data (such as Global Positioning System coordinates), to-do lists, employee directories, and the like.

The user profile 300 further comprises a set of routing rules 308. The routing rules 308 comprise one or more individual rules 310 that determine where incoming communication to the user are directed. In some embodiments, the routing rules 308 comprise a default set of routing rules when the user has not specified particular preferences. The set of routing rules 308 directs the routing and formatting for incoming messages intended for the user associated with the user profile 300. For example, the set of routing rules 308 may comprise individual rules 310 for routing incoming calls during the work day (such as rule 310₁), or the routing of IMs when the user does not have a valid IM client running (such as rule 310₂). The set of routing rules 308 is used by the routing module 108 as discussed with respect to FIG 1 to properly direct the communication messages to the appropriate destination.

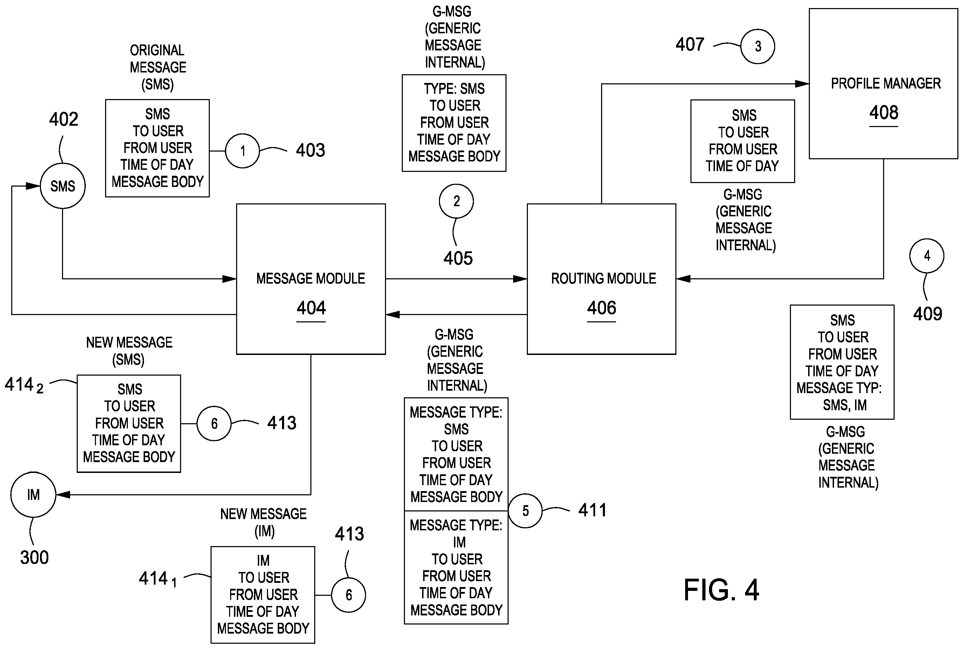

FIG 4 depicts a functional flow diagram showing a message passing through the communication system. The process begins with a message 402 being sent to a message module 404, such as the messaging module 104 shown with respect to FIG 1. In the present exemplary embodiment, the message 402 begins as a SMS, as shown at step 1 403. The SMS contains a TO field, a FROM field, a time of day field, and a message body field. The message module 404 receives the message 402 and converts the message 402 to a generic format at step 2 405. The generic format may include any format capable of being passed across a data network, such as an XML document, an email, or the like. The generic format includes information designating the type of the source message, such as the SMS in the present exemplary embodiment.

The message 402 in generic format is passed to the routing module 406. The routing module 406 queries the profile manager 408 to determine the proper routing for a SMS to the destination user from the source user at the particular time of day at step 3 407. At step 4 409, the profile manager 408 responds to the routing module 406 indicating that the message should be routed via SMS and IM. The routing module 406 then marks the generic message sent to the message module 404 to indicate that the message should be sent via SMS and IM at step 5 411. At step 6 413, the message module 404 converts the generic message into an IM 414₁ and a SMS 414₂, which are sent to the appropriate destinations associated with their communication medium (an IM client and a mobile device, respectively). Although the present exemplary embodiment relates to the conversion of an SMS to an IM, one of ordinary skill in the art would recognize that it is possible to convert between and among a variety of different communication methods, such as phone calls, voice mails, emails, SMS messages, IMs, and the like.

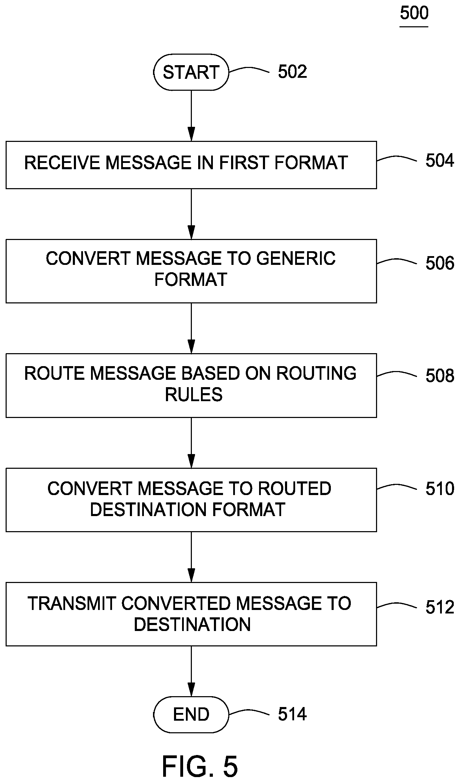

FIG 5 depicts a flow diagram of a method 500 for implementing unified management of communication events. The method 500 begins at step 502. At step 504, the method 500 receives a communication message in a first format, such as an email, SMS, IM, voicemail, incoming phone call, or the like. The method then proceeds to step 506, where the communication message is converted to a generic format. The generic format comprises information describing the source and destination of the message, the original message type, and the message payload. In the case of a phone call, the message payload may include instructions to connect the source caller with a given destination. After the message is converted to a generic format, the method 500 proceeds to step 508. At step 508, the method 500 performs routing operations to determine a destination for the message based on a series of rules, such as those presented in the user profiles as discussed with respect to FIG 3. Once a destination has been determined using the rules, the method proceeds to step 510.

At step 510, the method 500 converts the generic message into a format suitable for the destination determined at step 508. In some embodiments, the generic message is converted into multiple formats suitable for delivery to multiple destinations. After the message has been converted, the method proceeds to step 512.

At step 512, the method 500 transmits the converted message to the determined destination. In some embodiments, the message is transmitted to multiple destinations in one or more formats. Once the message has been transmitted, the method ends at step 514.

While the foregoing is directed to embodiments of the present invention, other and further embodiments of the invention may be devised without departing from the basic scope thereof, and the scope thereof is determined by the claims that follow.

## Claims

1. A method for providing unified communication event management comprising:
receiving a communication message in a first format;
converting the communication message to a message in generic format where the message in generic format is stored in a destination-agnostic format, and wherein the generic format includes information designating a type of the source message;
determining one or more message destinations based on a set of routing rules;
determining one or more message formats based on the determined destinations;
converting the message in generic format into a converted message where the converted message is stored in the one or more message formats associated with the one or more determined destinations; and
transmitting the converted message to the one or more determined destinations.

2. The method of claim 1, wherein the communication message is selected from a group consisting of a SMS, an IM, an email, a voicemail, and an incoming phone call.

3. The method of claim 1 or 2, wherein the one or more message destinations are determined using one or more user profiles comprising a user identifier, one or more communication addresses, and the routing rules.

4. The method of claim 3, further comprising accepting input via an interface module to generate the routing rules contained within the one or more user profiles.

5. The method of any of claims 1-3, wherein the routing rules are generated by synchronizing with a scheduling application.

6. The method of any of claims 1-5, wherein the communication message is an event message transmitted in response to a non-communication event.

7. The method of claim 6, wherein the non-communication event comprises a schedule programmed into a calendar module, wherein the schedule is generated by synchronizing with a scheduling application.

8. The method of claim 6, wherein the non-communication event comprises at least one of a geographic location of a user or a user programmed reminder.

9. The method of any of claims 1-8, wherein the determining one or more message destinations step further comprises:
receiving a set of location information sufficient to determine the location of a user;
determining the location of the user from the location information; and
selecting a message destination based upon the location of the user.

10. A system for implementing unified management of communication events comprising:
a messaging module for sending and receiving communication messages, converting the communication messages into a generic format, and converting one or more messages in generic format into a destination format, and wherein the generic format includes information designating a type of the source message; and
a routing module for determining one or more destinations for the communication messages based on one or more routing rules contained within one or more user profiles.

11. The system of claim 10, further comprising a profile manager for accessing the one or more user profiles to determine the one or more destinations.

12. The system of claim 10 or 11, further comprising a synchronization module for interfacing with the profile manager to create the one or more rules by synchronizing with a scheduling application.

13. The system of any of claims 10-12, further comprising at least one of an event module for generating non-communication events that are routed and transmitted as communication messages to one or more destinations, or a calendar module for generating the non-communication events.

14. The system of any of claims 10-13, further comprising an interface module to configure the one or more user profiles, wherein the user profiles comprise a user identifier, one or more communication addresses, and one or more routing rules.

15. The system of any of claims 10-14, further comprising:
a location module for identifying the location of a user and providing the location of the user to the routing module.

## Patentansprüche

1. Verfahren zum Bereitstellen eines vereinheitlichten Kommunikationsereignis-Managements, Folgendes umfassend:
Empfangen einer Kommunikationsnachricht in einem ersten Format;
Konvertieren der Kommunikationsnachricht in eine Nachricht in generischem Format, wobei die Nachricht im generischen Format in einem destinationsagnostischen Format gespeichert wird, und wobei das generische Format Informationen enthält, die einen Typ der Quellnachricht bezeichnen;
Bestimmen einer oder mehrerer Nachrichtendestination/en auf Grundlage eines Satzes von Routingregeln;
Bestimmen eines Nachrichtenformats oder mehrerer Nachrichtenformate auf Grundlage der bestimmten Destinationen;
Konvertieren der Nachricht im generischen Format in eine konvertierte Nachricht, wobei die konvertierte Nachricht in dem einen oder den mehreren Nachrichtenformat/en gespeichert wird, das/die der einen oder den mehreren bestimmten Destination/en zugeordnet ist/sind; und
Übertragen der konvertierten Nachricht an die eine oder die mehreren bestimmte/n Destination/en.

2. Verfahren nach Anspruch 1, wobei die Kommunikationsnachricht aus einer Gruppe ausgewählt ist, die aus einer SMS, einer IM, einer Email, einer Voicemail und einem eingehenden Telefonanruf besteht.

3. Verfahren nach Anspruch 1 oder 2, wobei die eine oder die mehreren Nachrichtendestination/en anhand eines Nutzerprofils oder mehrerer Nutzerprofile bestimmt wird/werden, das/die eine Nutzerkennung, eine oder mehrere Kommunikationsadresse/n und die Routingregeln umfasst/umfassen.

4. Verfahren nach Anspruch 3, darüber hinaus umfassend, eine Eingabe über ein Schnittstellenmodul anzunehmen, um die Routingregeln zu generieren, die in dem einen oder den mehreren Nutzerprofil/en enthalten sind.

5. Verfahren nach einem der Ansprüche 1 bis 3, wobei die Routingregeln durch Synchronisieren mit einer Ablaufplanungsanwendung generiert werden.

6. Verfahren nach einem der Ansprüche 1 bis 5, wobei es sich bei der Kommunikationsnachricht um eine Ereignisnachricht handelt, die als Antwort auf ein Nichtkommunikationsereignis übertragen wird.

7. Verfahren nach Anspruch 6, wobei das Nichtkommunikationsereignis einen in einem Kalendermodul programmierten Ablaufplan umfasst, wobei der Ablaufplan durch Synchronisieren mit einer Ablaufplanungsanwendung generiert wird.

8. Verfahren nach Anspruch 6, wobei das Nichtkommunikationsereignis mindestens einen geografischen Standort eines Nutzers oder eine nutzerprogrammierte Erinnerung umfasst.

9. Verfahren nach einem der Ansprüche 1 bis 8, wobei der Schritt des Bestimmens einer oder mehrerer Nachrichtendestination/en darüber hinaus umfasst:
Empfangen eines Satzes von Standortinformationen, die zum Bestimmen des Standorts eines Nutzers ausreichen;
Bestimmen des Standorts des Nutzers aus den Standortinformationen; und
Auswählen einer Nachrichtendestination auf Grundlage des Standorts des Nutzers.

10. System zum Implementieren eines vereinheitlichten Managements von Kommunikationsereignissen, Folgendes umfassend:
ein Nachrichtenübermittlungsmodul zum Senden und Empfangen von Kommunikationsnachrichten, zum Konvertieren der Kommunikationsnachrichten in ein generisches Format, und zum Konvertieren einer oder mehrerer Nachrichten im generischen Format in ein Destinationsformat, und wobei des generische Format Informationen umfasst, die einen Typ der Quellnachricht bezeichnen; und
ein Routingmodul zum Bestimmen einer oder mehrerer Destination/en für die Kommunikationsnachrichten auf Grundlage einer oder mehrerer Routingregel/n, die in einem oder mehreren Nutzerprofil/en enthalten ist/sind.

11. System nach Anspruch 10, darüber hinaus einen Profilmanager zum Zugriff auf das eine oder die mehreren Nutzerprofil/e umfassend, um die eine oder die mehreren Destination/en zu bestimmen.

12. System nach Anspruch 10 oder 11, darüber hinaus ein Synchronisationsmodul zur Schnittstellenkopplung mit dem Profilmanager umfassend, um die eine oder die mehreren Regel/n durch Synchronisieren mit einer Ablaufplanungsanwendung zu generieren.

13. System nach einem der Ansprüche 10 bis 12, darüber hinaus mindestens ein Ereignismodul zum Generieren von Nichtkommunikationsereignissen, die als Kommunikationsnachrichten zu einer oder mehreren Destination/en geroutet und übertragen werden, oder ein Kalendermodul zum Generieren der Nichtkommunikationsereignisse umfassend.

14. System nach einem der Ansprüche 10 bis 13, darüber hinaus ein Schnittstellenmodul umfassend, um das eine oder die mehreren Nutzerprofil/e zu konfigurieren, wobei die Nutzerprofile eine Nutzerkennung, eine oder mehrere Kommunikationsadresse/n und eine oder mehrere Routingregel/n umfassen.

15. System nach einem der Ansprüche 10 bis 14, darüber hinaus umfassend:
ein Standortmodul zum Identifizieren des Standorts eines Nutzers und zum Bereitstellen des Standorts des Nutzers an das Routingmodul.

## Revendications

1. Procédé de fourniture d'une gestion unifiée d'événements de communication, comprenant :
la réception d'un message de communication dans un premier format ;
la conversion du message de communication en un message de format générique, le message de format générique étant stocké dans un format agnostique de destination, et sachant que le format générique inclut des informations désignant un type de message de source ;
la détermination d'une ou de plusieurs destinations de message sur la base d'un ensemble de règles d'acheminement ;
la détermination d'un ou de plusieurs formats de message sur la base des destinations déterminées ;
la conversion du message de format générique en un message converti, le message converti étant stocké dans l'un ou les plusieurs formats de message associés à l'une ou aux plusieurs destinations déterminées ; et
l'émission du message converti vers l'une ou les plusieurs destinations déterminées.

2. Le procédé de la revendication 1, sachant que le message de communication est sélectionné dans un groupe constitué par un SMS, un IM, un courriel, un courriel vocal, et un appel téléphonique entrant.

3. Le procédé de la revendication 1 ou 2, sachant que l'une ou les plusieurs destinations de message sont déterminées au moyen d'un ou de plusieurs profils d'utilisateur comprenant un identifiant d'utilisateur, une ou plusieurs adresses de communication, et les règles d'acheminement.

4. Le procédé de la revendication 3, comprenant en outre l'acceptation d'un intrant via un module d'interface pour générer les règles d'acheminement contenues dans l'un ou les plusieurs profils d'utilisateur.

5. Le procédé de l'une quelconque des revendications 1 à 3, sachant que les règles d'acheminement sont générées par synchronisation avec une application de planification.

6. Le procédé de l'une quelconque des revendications 1 à 5, sachant que le message de communication est un message d'événement émis en réponse à un événement de non-communication.

7. Le procédé de la revendication 6, sachant que l'événement de non-communication comprend un planning programmé en un module de calendrier, sachant que le planning est généré par synchronisation avec une application de planification.

8. Le procédé de la revendication 6, sachant que l'événement de non-communication comprend au moins l'un d'un emplacement géographique d'un utilisateur ou d'un rappel programmé par un utilisateur.

9. Le procédé de l'une quelconque des revendications 1 à 8, sachant que l'étape de détermination d'une ou de plusieurs destinations de message comprend en outre :
la réception d'un ensemble d'informations d'emplacement suffisantes pour déterminer l'emplacement d'un utilisateur ;
la détermination de l'emplacement de l'utilisateur à partir des informations d'emplacement ; et
la sélection d'une destination de message sur la base de l'emplacement de l'utilisateur.

10. Système destiné à implémenter une gestion unifiée d'événements de communication, comprenant :
un module de messagerie pour l'envoi et la réception de messages de communication, la conversion des messages de communication en un format générique, et la conversion d'un ou de plusieurs messages de format générique en un format de destination, et sachant que le format générique inclut des informations désignant un type de message de source ; et
un module d'acheminement destiné à déterminer une ou plusieurs destinations pour les messages de communication sur la base d'une ou de plusieurs règles d'acheminement contenues dans un ou plusieurs profils d'utilisateur.

11. Le système de la revendication 10, comprenant en outre un gestionnaire de profils destiné à accéder à l'un ou aux plusieurs profils d'utilisateur pour déterminer l'une ou les plusieurs destinations.

12. Le système de la revendication 10 ou 11, comprenant en outre un module de synchronisation destiné à s'interfacer avec le gestionnaire de profils pour créer l'une ou les plusieurs règles par synchronisation avec une application de planification.

13. Le système de l'une quelconque des revendications 10 à 12, comprenant en outre au moins l'un d'un module d'événements destiné à générer des événements de non-communication qui sont acheminés et émis en tant que messages de communication vers une ou plusieurs destinations, ou d'un module de calendrier destiné à générer les événements de non-communication.

14. Le système de l'une quelconque des revendications 10 à 13, comprenant en outre un module d'interface pour configurer l'un ou les plusieurs profils d'utilisateur, sachant que les profils d'utilisateur comprennent un identifiant d'utilisateur, une ou plusieurs adresses de communication, et une ou plusieurs règles d'acheminement.

15. Le système de l'une quelconque des revendications 10 à 14, comprenant en outre :
un module d'emplacement destiné à identifier l'emplacement d'un utilisateur et fournissant l'emplacement de l'utilisateur au module d'acheminement.
